# EUROPEAN PATENT APPLICATION

(11) **EP 4 653 359 A1**
(43) Date of publication of application: **26.11.2025**
(21) Application number: 24902180.9
(22) Date of filing: 20.08.2024
(51) Int. Cl.: B65G 65/23, B65G 69/00, B60P 1/04

(54) **UNLOADING PLATFORM AND UNLOADING METHOD**

(30) Priority: 15.12.2023 CN 202311738009
(71) Applicant: CRRC Qiqihar Rolling Stock Co., Ltd., Qiqihar, Heilongjiang 161002 (CN); PetroChina Company Limited, Beijing 100011 (CN)
(72) Inventor: CAO, Bingwu, Qiqihar, Heilongjiang 161002 (CN); LI, Tao, Qiqihar, Heilongjiang 161002 (CN); CHEN, Lei, Qiqihar, Heilongjiang 161002 (CN); YANG, Tiankui, Qiqihar, Heilongjiang 161002 (CN); CHEN, Lanzhong, Qiqihar, Heilongjiang 161002 (CN); YANG, Xuebai, Qiqihar, Heilongjiang 161002 (CN); ZHU, Wanhai, Qiqihar, Heilongjiang 161002 (CN); LI, Hua, Qiqihar, Heilongjiang 161002 (CN); LIU, Haipeng, Qiqihar, Heilongjiang 161002 (CN); YUE, Linghan, Qiqihar, Heilongjiang 161002 (CN); YANG, Qipeng, Qiqihar, Heilongjiang 161002 (CN); CHEN, Tinggang, Qiqihar, Heilongjiang 161002 (CN); HOU, Tianhua, Qiqihar, Heilongjiang 161002 (CN); ZHANG, Junfeng, Qiqihar, Heilongjiang 161002 (CN); LI, Linjie, Qiqihar, Heilongjiang 161002 (CN); LI, Cui, Qiqihar, Heilongjiang 161002 (CN)
(74) Representative: Zermani Biondi Orsi, Umberto
(86) International application number: PCT/CN2024/113467
(87) International publication number: WO 2025/123754

(57) **Abstract**

The present invention provides an unloading platform and an unloading method. The unloading platform includes: a platform portion; a tilting frame, used for carrying a container, the tilting frame having a first working state, wherein when the tilting frame is in the first working state, a first side of the tilting frame is hingedly connected to the platform portion, and a second side of the tilting frame has a first initial position in which it is in contact with the platform portion and a first tilted position in which it is raised relative to the platform portion; lifting members, provided between the platform portion and the tilting frame, wherein the lifting members drive the tilting frame to switch between the first initial position and the first tilted position; and a first limiting frame, provided on a first side portion of the platform portion, wherein when the tilting frame is in the tilted position, the tilting frame or the container is in limiting engagement with the first limiting frame. The technical solution of the present application effectively solves the problem in the related art that unloading a synthetic resin container on a vehicle body results in low unloading efficiency.

## Description

### Related Application

The present application claims priority to Chinese Patent Application No. CN202311738009.8, filed with the Chinese Patent Office on December 15, 2023 and entitled "Unloading Platform and Unloading Method", which is incorporated herein by reference in its entirety.

### Technical Field

The present invention relates to the technical field of container unloading, and in particular, to an unloading platform and an unloading method.

### Background

Synthetic resin bulk granular goods can be used for packaging production and the manufacture of daily necessities. They are high-value petrochemical products. With social development and the improvement of people's living standards, the demand for synthetic resin products is gradually increasing. In current railway transportation of synthetic resins, bagged covered wagon transport and bulk bag transport using general-purpose containers are widely used. These methods require significant manual labor for handling during transportation, resulting in high transportation costs. Moreover, in bulk bag transport, non-standard use of bulk bags often leads to substantial goods losses.

Currently, to ensure the safe transportation of synthetic resins, synthetic resin containers are used. These synthetic resin containers are designed to transport synthetic resin bulk granular goods, featuring light self-weight, large capacity, top-loading and side-unloading capabilities, and integration with hydraulic lifting frames on road transport vehicles. They are suitable for large-scale transportation and storage of synthetic resin bulk granular goods, enabling safe, clean, and efficient transportation with low overall transportation costs and high economic benefits.

In the related art, when a synthetic resin container is unloaded, unloading is performed on a vehicle body. Due to site constraints at a user end, only one vehicle can be parked and unloaded at a time. This results in a slow vehicle turnover speed, which in turn leads to low unloading efficiency.

### Summary

The main object of the present invention is to provide an unloading platform and an unloading method, so as to solve the problem in the related art that unloading a synthetic resin container on a vehicle body results in low unloading efficiency.

To achieve the described object, according to one aspect of the present invention, an unloading platform is provided, including: a platform portion; a tilting frame, used for carrying a container, the tilting frame having a first working state, wherein when the tilting frame is in the first working state, a first side of the tilting frame is hingedly connected to the platform portion, and a second side of the tilting frame has a first initial position in which it is in contact with the platform portion and a first tilted position in which it is raised relative to the platform portion; a lifting member, provided between the platform portion and the tilting frame, wherein the lifting member drives the tilting frame to switch between the first initial position and the first tilted position; and a first limiting frame, provided on a first side portion of the platform portion, wherein when the tilting frame is in the tilted position, the tilting frame or the container is in limiting engagement with the first limiting frame.

Further, a stop slope is provided on a side of the first limiting frame facing the tilting frame; and in a direction from top to bottom, a horizontal distance between the stop slope and the platform portion gradually decreases.

Further, the unloading platform further includes a second limiting frame, the second limiting frame is provided on a second side portion of the platform portion, and the tilting frame has a second working state; when the tilting frame is in the second working state, the second side of the tilting frame is hingedly connected to the platform portion, and the first side of the tilting frame has a second initial position in which it is in contact with the platform portion and a second tilted position in which it is raised relative to the platform portion; and the lifting members drive the tilting frame to switch between the second initial position and the second tilted position.

Further, the unloading platform further includes a locking structure, the locking structure is provided between the platform portion and the second side of the tilting frame, and the locking structure has a locking state and an unlocking state; and when the locking structure is in the unlocking state, the lifting members can drive the tilting frame to move from the first initial position to the first tilted position.

Further, the tilting frame includes an outer frame as well as a first main beam and a second main beam connected within the outer frame; the outer frame includes a first end beam, a first side beam, a second end beam and a second side beam which are arranged sequentially; cross-sectional areas of the first end beam, the second end beam, the first side beam and the second side beam are all equal; and the first main beam and the second main beam are both arranged along a length direction of the outer frame and are spaced apart, cross-sectional areas of the first main beam and the second main beam are equal, and cross-sectional area of the first main beam is smaller than cross-sectional area of the first end beam.

Further, the platform portion includes a platform body and a mounting frame provided on the platform body, and the tilting frame is hingedly connected to the mounting frame.

Further, the platform body includes a third end beam and a fourth end beam which are spaced apart as well as a third side beam and a fourth side beam which are provided between the third end beam and the fourth end beam; the third side beam and the fourth side beam have a same shape, a height of a first end of the third side beam is greater than a height of a second end of the third side beam, and two ends of the third end beam extend beyond the third side beam and the fourth side beam; and the platform body further includes a plurality of support beams, the plurality of support beams are arranged at intervals, and two ends of each of the plurality of support beams respectively extend beyond the third side beam and the fourth side beam.

Further, the platform body further includes a plurality of reinforcing beams, and the plurality of reinforcing beams are provided at intervals between the third side beam and the fourth side beam; and/or, the platform body further includes a plurality of connecting rods, and at least one connecting rod is provided between the third end beam and the third side beam, between the third end beam and the fourth side beam, between the fourth end beam and the third side beam, between the fourth end beam and the fourth side beam, between the first end of each of the plurality of support beams and the third side beam, and between the second end of each of the plurality of support beams and the fourth side beam.

Further, the platform portion further includes a traveling mechanism, and the traveling mechanism is provided below the platform body.

According to another aspect of the present application, an unloading method is provided, which is implemented by an unloading platform. **The** unloading method includes: maintaining a tilting frame is maintained at an initial position for a first preset duration; and after the first preset duration has elapsed, moving the tilting frame from the first initial position to a first tilted position, wherein the unloading platform is the described unloading platform.

Further, a step of moving the tilting frame from the first initial position to a first tilted position includes: controlling the first preset duration according to a pressure signal detected by a pressure sensor; gradually tilting the tilting frame within a second preset duration to reach the first tilted position; and after the container reaches the first tilted position, moving the tilting frame from the first tilted position to the first initial position within a third preset duration.

Further, a step of moving the tilting frame from the first initial position to a first tilted position includes: controlling the tilting frame to reach a first tilted position at a first angle relative to a vertical plane, and maintaining for a fourth preset duration; and after the tilting frame has been maintained for the fourth preset duration, controlling the tilting frame to reach a second tilted position at a second angle relative to the vertical plane, and maintaining for a fifth preset duration, wherein the second angle is greater than the first angle.

According to the technical solution of the present application, a tilting frame is used for carrying a container; the tilting frame has a first working state; when the tilting frame is in the first working state, a first side of the tilting frame is hingedly connected to a platform portion; and the tilting frame has a first initial position and a first tilted position; when the tilting frame is in the first initial position, a second side of the tilting frame is in contact with the platform portion; and when the tilting frame is in the first tilted position, the second side of the tilting frame is raised relative to the platform portion. The lifting member is provided between the platform portion and the tilting frame, and the lifting member can drive the tilting frame to switch between the first initial position and the first tilted position. A first limiting frame is provided on a first side of the platform portion; and when the tilting frame is in the first tilted position, the tilting frame or the container is in limiting engagement with the first limiting frame. By means of the described arrangement, the tilting frame can be used for carrying a container, i.e. the container can be placed on the tilting frame. In this way, the container does not need to be unloaded on a vehicle body, thereby increasing vehicle turnover speed and improving unloading efficiency. Moreover, as the tilting frame can switch between the first initial position and the first tilted position, the container can be raised on the tilting frame, thereby enabling rapid unloading of the container. At the same time, under the action of the first limiting frame, the position of the container can be restricted to prevent the container from falling off the tilting frame during unloading. Therefore, the technical solution of the present application effectively solves the problem in the related art that unloading a synthetic resin container on a vehicle body results in low unloading efficiency.

### Brief Description of the Drawings

The accompanying drawings, which form a part of the present application, are used to provide a further understanding of the present invention. The exemplary embodiments of the present invention and the description thereof are used to explain the present invention, and do not form improper limits to the present invention. In the drawings:
Fig. 1 shows a schematic perspective view of an embodiment of an unloading platform according to the present invention;
Fig. 2 shows a schematic side view of the unloading platform of Fig. 1;
Fig. 3 shows a schematic perspective view of the unloading platform in Fig. 1, with tilting frame in a first tilted position;
Fig. 4 shows a partial enlarged view of section A of the unloading platform of Fig. 3;
Fig. 5 shows a schematic side view of the unloading platform of Fig. 3;
Fig. 6 shows a schematic perspective view of the unloading platform of Fig. 1, with the tilting frame in a first initial position;
Fig. 7 shows a partial enlarged view of section B of the unloading platform of Fig. 6;
Fig. 8 shows a schematic front view of the unloading platform of Fig. 6;
Fig. 9 shows a schematic side view of the unloading platform of Fig. 6;
Fig. 10 shows a schematic perspective view of the tilting frame of the unloading platform of Fig. 1;
Fig. 11 shows a schematic perspective view of a platform portion of the unloading platform of Fig. 1;
Fig. 12 shows a schematic top view of the platform portion of Fig. 11;
Fig. 13 shows a schematic front view of the platform portion of Fig. 11.

The described drawings include the following reference signs:
1: container; 10: platform portion; 11: platform body; 111: third end beam; 112: fourth end beam; 113: third side beam; 114: fourth side beam; 115: support beam; 116: reinforcing beam; 117: connecting rod; 12: mounting frame; 13: traveling mechanism; 20: tilting frame; 21: outer frame; 211: first end beam; 212: first side beam; 213: second end beam; 214: second side beam; 22: first main beam; 23: second main beam; 24: connecting beam; 25: positioning pin; 30: lifting member; 40: first limiting frame; 41: stop slope; 50: second limiting frame; 60: locking structure; 61: locking seat; 611: stop post; 62: connecting seat; 621: connecting frame; 622: stop pin.

### Detailed Description of the Embodiments

The following clearly and completely describes the technical solutions in the embodiments of the present invention with reference to the accompanying drawings in the embodiments of the present invention. Apparently, the described embodiments are merely a part rather than all of the embodiments of the present invention. The following description of at least one exemplary embodiment is merely illustrative in nature and is in no way intended to limit the invention, its application, or uses. All other embodiments obtained by persons of ordinary skill in the art based on the embodiments of the present invention without creative efforts shall belong to the scope of protection of the present invention.

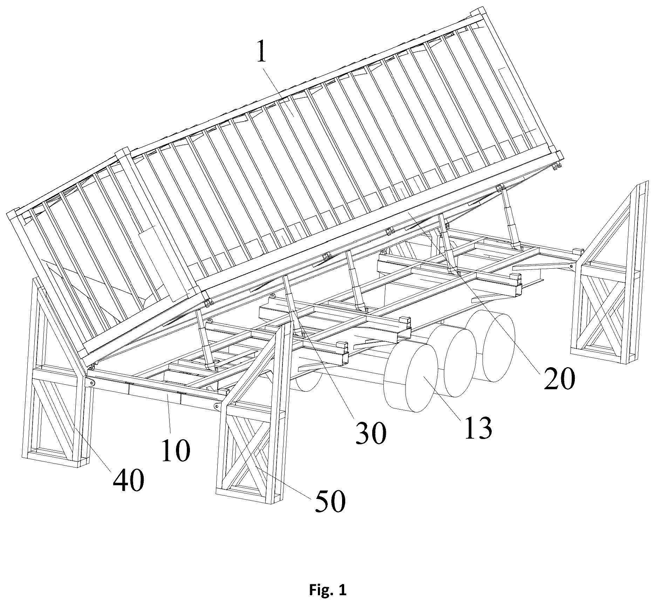

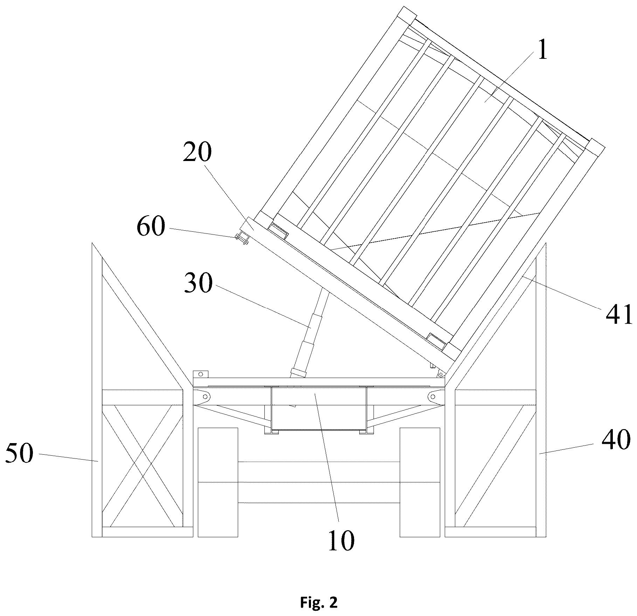

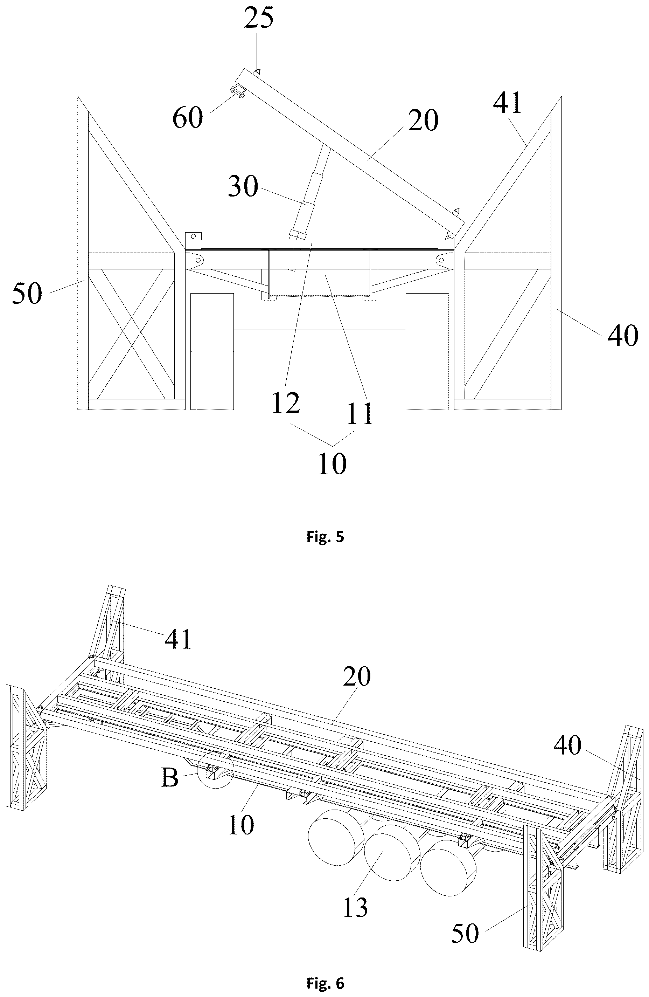

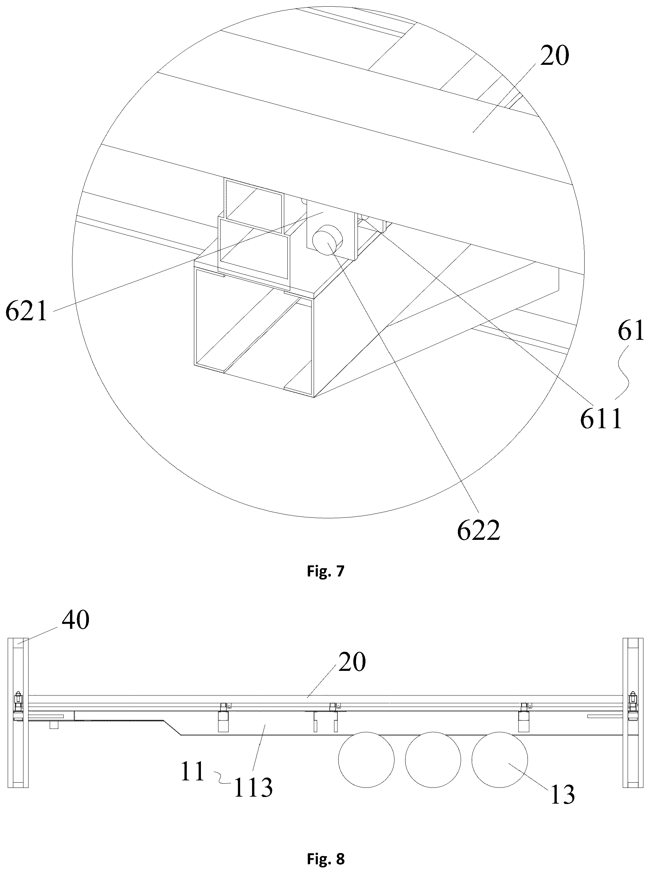

As shown in Figs. 1-9, in this embodiment, an unloading platform includes a platform portion 10, a tilting frame 20, a lifting member 30 and a first limiting frame 40. The tilting frame 20 is used for carrying a container 1. The tilting frame 20 has a first working state. When the tilting frame 20 is in the first working state, a first side of the tilting frame 20 is hingedly connected to the platform portion 10, and a second side of the tilting frame 20 has a first initial position in which it is in contact with the platform portion 10 and a first tilted position in which it is raised relative to the platform portion 10. The lifting member 30 are provided between the platform portion 10 and the tilting frame 20, and the lifting member 30 drives the tilting frame 20 to switch between the first initial position and the first tilted position. The first limiting frame 40 is provided on a first side portion of the platform portion 10; and when the tilting frame 20 is in the first tilted position, the tilted frame 20 or the container 1 is in limiting engagement with the first limiting frame 40.

According to the technical solution of the present application, the tilting frame 20 is used for carrying a container 1; the tilting frame 20 has a first working state; when the tilting frame 20 is in the first working state, a first side of the tilting frame 20 is hingedly connected to the platform portion 10; and the tilting frame 20 has a first initial position and a first tilted position; when the tilting frame 20 is in the first initial position, a second side of the tilting frame 20 is in contact with the platform portion 10; and when the tilting frame 20 is in the first tilted position, the second side of the tilting frame 20 is raised relative to the platform portion 10. The lifting member 30 is provided between the platform portion 10 and the tilting frame 20, and the lifting member 30 can drive the tilting frame 20 to switch between the first initial position and the first tilted position. The first limiting frame 40 is provided on a first side of the platform portion 10; and when the tilting frame 20 is in the first tilted position, the tilting frame 20 or the container 1 is in limiting engagement with the first limiting frame 40. By means of the described arrangement, the tilting frame 20 can be used for carrying a container 1, i.e. the container 1 can be placed on the tilting frame 20. In this way, the container 1 does not need to be unloaded on a vehicle body, thereby increasing vehicle turnover speed and improving unloading efficiency. Moreover, as the tilting frame 20 can switch between the first initial position and the first tilted position, the container 1 can be raised on the tilting frame 20, thereby enabling rapid unloading of the container 1. At the same time, under the action of the first limiting frame 40, the position of the container 1 can be restricted to prevent the container 1 from falling off the tilting frame during unloading. Therefore, the technical solution of the present application effectively solves the problem in the related art that unloading a synthetic resin container on a vehicle body results in low unloading efficiency.

It should be noted that both sides of the tilting frame 20 can tilt relative to the platform portion 10; the first side of the tilting frame 20 is provided with a first connecting seat, and the second side of the tilting frame 20 is provided with a second connecting seat; the first side of the platform portion 10 is provided with a third connecting seat, and the second side of the platform portion 10 is provided with a fourth connecting seat; and when the first side of the tilting frame 20 is hingedly connected to the platform portion 10, the first connecting seat and the third connecting seat are connected by a pin shaft, the pin shaft is detachably provided, and at this time, the second connecting seat and the fourth connecting seat are not connected. When the second side of the tilting frame 20 is hingedly connected to the platform portion 10, the second connecting seat and the fourth connecting seat are connected by a pin shaft, and the first connecting seat and the third connecting seat are not connected.

As shown in Figs. 1, 2, 3, 5, 6 and 9, in this embodiment, a stop slope 41 is provided on the side of the first limiting frame 40 facing the tilting frame 20; and in a direction from top to bottom, the horizontal distance between the stop slope 41 and the platform portion 10 gradually decreases. The provision of the stop slope 41 can effectively stop the container 1 or the tilting frame 20, thereby effectively limiting the position of the container 1, resulting in a more stable tilted position for the container 1.

Specifically, the angle between the stop slope 41 and the vertical plane is between 20° and 50°. Preferably, the angle between the stop slope 41 and the vertical surface is 35°.

As shown in Figs. 1, 2, 3, 5, 6 and 9, in this embodiment, the unloading platform further includes a second limiting frame 50; the second limiting frame 50 is provided on a second side portion of the platform portion 10; the tilting frame 20 has a second operating state; when the tilting frame 20 is in the second working state, the second side of the tilting frame 20 is hingedly connected to the platform portion 10, the first side of the tilting frame 20 has a second initial position in which it is on contact with the platform portion 10 and a second tilted position in which it is raised relative to the platform portion 10; and the lifting member 30 drives the tilting frame 20 to switch between the second initial position and the second tilted position. By means of the described arrangement, the container 1 can be mounted on the tilting frame 20 in any direction, and unloading can be achieved on both sides of the unloading platform, thereby effectively improving the convenience of unloading.

Specifically, in this embodiment, both the first limiting frame 40 and the second limiting frame 50 are detachably connected to the platform portion 10.

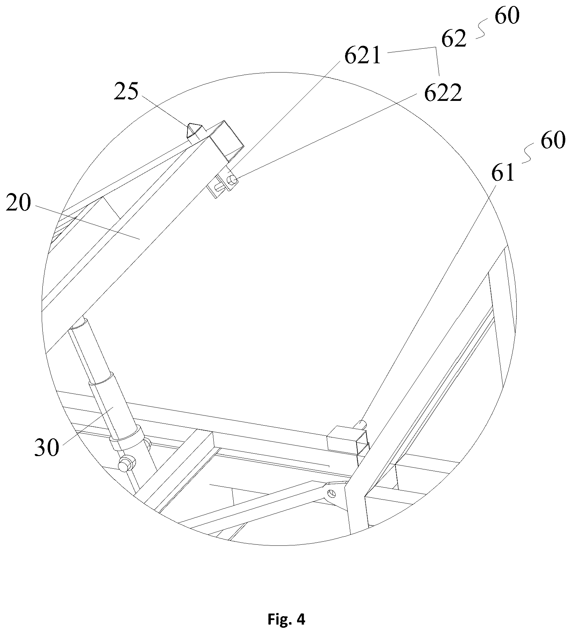

As shown in Figs. 4 to 7, in this embodiment, the unloading platform further includes a locking structure 60; the locking structure 60 is provided between the platform portion 10 and the second side of the tilting frame 20; the locking structure 60 has a locked state and an unlocked state; and when the locking structure 60 is in the unlocked state, the lifting member 30 can drive the tilting frame 20 to move from the first initial position to the first tilted position. **The** provision of the locking structure 60 can effectively lock the tilting frame 20 and the platform part 10 together; and when the tilting frame 20 is not in use, the tilting frame 20 is locked to the platform portion 10, thereby preventing the tilting frame 20 from being accidentally opened and enhancing the overall structural safety.

Specifically, the locking structure 60 includes a locking seat 61 and a connecting seat 62; the locking seat 61 is provided on the platform portion 10, and the connecting seat 62 is provided on the tilting frame 20; the locking seat 61 includes a stop post 611, and the connecting seat 62 includes a connecting frame 621 and a stop pin 622; the stop pin 622 is detachably connected to the connecting frame 621; and when the locking structure 60 is in the locked state, the stop pin 622 is located below the stop post 611.

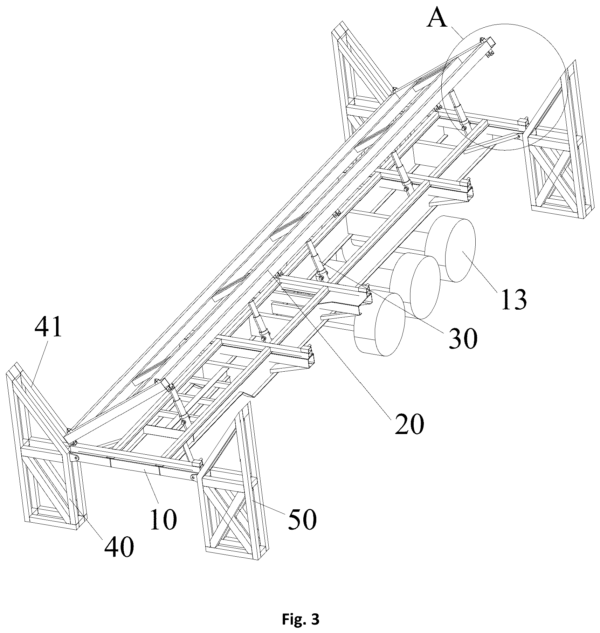

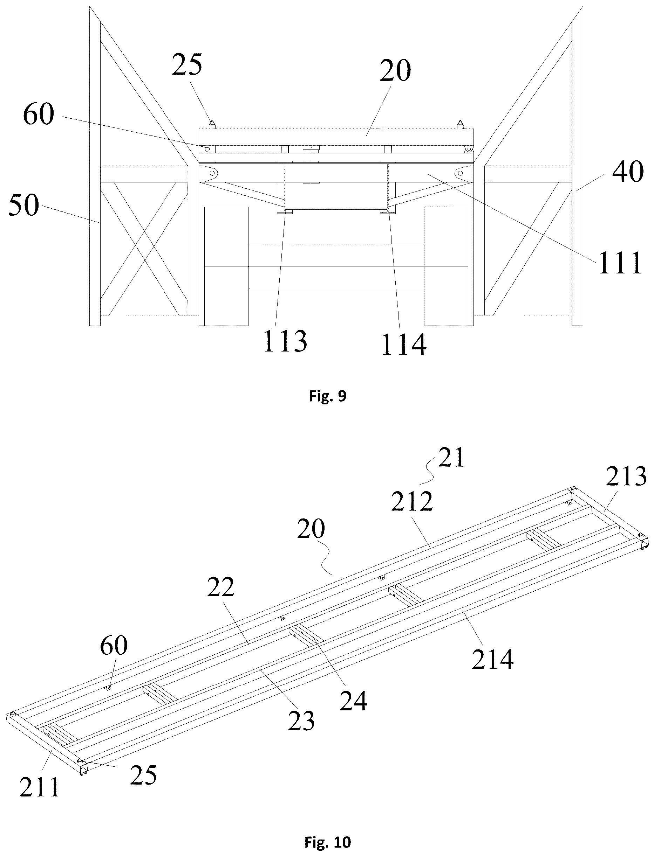

As shown in Figs. 3 and 10, in this embodiment, the tilting frame 20 includes an outer frame 21, and a first main beam 22 and a second main beam 23 connected within the outer frame 21; the outer frame 21 includes a first end beam 211, a first side beam 212, a second end beam 213 and a second side beam 214 which are arranged sequentially; the cross-sectional areas of the first end beam 211, the second end beam 213, the first side beam 212 and the second side beam 214 are all equal; and the first main beam 22 and the second main beam 23 are both arranged along the length direction of the outer frame 21 and are spaced apart, the cross-sectional areas of the first main beam 22 and the second main beam 23 are equal, and the cross-sectional area of the first main beam 22 is smaller than the cross-sectional area of the first end beam 211. The described arrangement can effectively improve the structural strength of the tilting frame 20, thereby enabling the tilting frame 20 to carry a container 1 with a greater weight.

Specifically, the tilting frame 20 further includes a plurality of connecting beams 24; the plurality of connecting beams 24 are arranged at intervals and connected between the first main beam 22 and the second main beam 23; and the plurality of connecting beams 24 form a plurality of connecting groups, each connecting group includes two connecting beams 24 spaced apart, and the distance between two connecting beams 24 in each connecting group is less than the distance between two adjacent connecting groups. The extending end of each lifting member 30 is connected to a connecting group. Preferably, each lifting member is a hydraulic cylinder.

As shown in Figs. 3 and 10, in this embodiment, the top surface of the tilting frame 20 is provided with a plurality of positioning pins 25, and at least one positioning pin 25 is provided at each corner of the tilting frame 20. The positioning pins can be inserted into the container, thereby enhancing the stability of the connection between the container and the tilting frame.

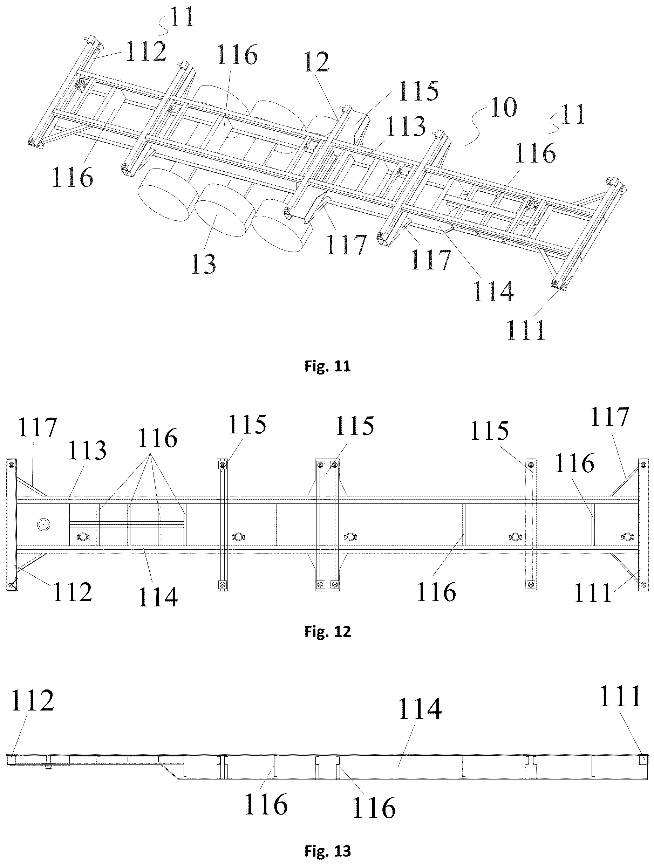

As shown in Figs. 11 to 13, in this embodiment, the platform portion 10 includes a platform body 11 and an mounting frame 12 provided on the platform body 11, and the tilting frame 20 is hingedly connected to the mounting frame 12. By means of the described arrangement, the structural strength of the platform portion 10 can be effectively improved.

As shown in Figs. 11 to 13, in this embodiment, the platform body 11 includes a third end beam 111 and a fourth end beam 112 which are spaced apart, as well as a third side beam 113 and a fourth side beam 114 which are provided between the third end beam 111 and the fourth end beam 112; the third side beam 113 and the fourth side beam 114 have the same shape, the height of a first end of the third side beam 113 is greater than the height of a second end of the third side beam 113, and two ends of the third end beam 111 extend beyond the third side beam 113 and the fourth side beam 114; and the platform body 11 further includes a plurality of support beams 115, the plurality of support beams 115 are arranged at intervals, and two ends of each support beam 115 respectively extend beyond the third side beam 113 and the fourth side beam 114. The described arrangement can improve the structural strength.

As shown in Fig. 11 to Fig. 13, in this embodiment, the platform body 11 further includes a plurality of reinforcing beams 116, and the plurality of reinforcing beams 116 are provided at intervals between the third side beam 113 and the fourth side beam 114; the platform body 11 further includes a plurality of connecting rods 117, and at least one connecting rod 117 is provided between the third end beam 111 and the third side beam 113, between the third end beam 111 and the fourth side beam 114, between the fourth end beam 112 and the third side beam 113, between the fourth end beam 112 and the fourth side beam 114, between the first end of each support beam 115 and the third side beam 113, and between the second end of each support beam 115 and the fourth side beam 114. The provision of the connecting rods 117 can further improve the structural strength of the platform body 11.

As shown in Fig. 11, in this embodiment, the platform portion 10 further includes a traveling mechanism 13, and the traveling mechanism 13 is provided below the platform body 11. The provision of the traveling mechanism 13 enables the platform portion 10 to be movable, so that the position of the unloading platform can be changed, thereby improving the versatility of the unloading platform.

According to another aspect of the present application, an unloading method is provided, which is implemented by an unloading platform. The unloading method in this embodiment includes:
maintaining a tilting frame 20 at an initial position for a first preset duration; and
after the first preset duration has elapsed, moving the tilting frame 20 from the first initial position to a first tilted position,
wherein the unloading platform is the described unloading platform.

By means of the described arrangement, unloading of a container can be effectively achieved, and the unloading efficiency can be improved.

The step of moving the tilting frame 20 from the first initial position to a first tilted position includes: controlling the first preset duration according to a pressure signal detected by a pressure sensor; gradually tilting the tilting frame 20 within a second preset duration to reach the first tilted position; and after the container 1 reaches the first tilted position, moving the tilting frame 20 from the first tilted position to the first initial position within a third preset duration.

By means of the described arrangement, the pressure sensor detects real-time pressure, and when the ratio of the real-time pressure to the full-load weight of the container is between 0.6 and 0.8, the lifting members are activated. During the gradual lifting process, unloading can be effectively achieved.

Specifically, when the ratio of the real-time weight of the container 1 to the total weight of the container 1 is greater than 0.55, the container 1 is tilted at a first speed; when the ratio of the real-time weight of the container 1 to the total weight of the container 1 is greater than or equal to 0.3 and less than or equal to 0.55, the container 1 is tilted at a second speed; and when the ratio of the real-time weight of the container 1 to the total weight of the container 1 is less than 0.3, the container 1 is tilted at a third speed, wherein the first speed is less than the second speed, and the third speed is less than the second speed.

The first speed, the second speed, and the third speed are all between 0.75°/min and 1.25°/min.

The step of moving the tilting frame 20 from the initial position to a first tilted position includes: controlling the tilting frame 20 to reach a first tilted position at a first angle relative to a vertical plane, and maintaining for a fourth preset duration; and after the tilting frame 20 has been maintained for the fourth preset duration, controlling the tilting frame 20 to reach a second tilted position at a second angle relative to the vertical plane, and maintaining for a fifth preset duration, wherein the second angle is greater than the first angle.

By means of the described arrangement, when the container 1 reaches the first tilted position, the unloading speed is relatively fast; after the fourth preset duration, the unloading speed at the first tilted position decreases, and by further tilting by the second angle to reach the second tilted position, the unloading speed is increased again, thereby improving the unloading efficiency; and after maintaining the second tilted position for the fifth preset duration, the goods can be fully unloaded.

The arrangement that the first angle is smaller than the second angle enables the container to move more easily; that is, when the container is tilted to the first angle, the weight of goods loaded inside the container is still heavy, if the container moves at a large angle at once, a higher requirement is required from the lifting members 30; in contrast, if the container moves at a small angle at once, there is no need for the lifting members 30 to have a higher lifting force; and after maintaining the first tilted position for the fourth preset duration, a lot of goods flow out from the container 1, that is, the weight of the container 1 decreases, and at this time, the container 1 continues to be tilted at the second angle, and the container 1 can be tilted more easily. That is, by means of the described arrangement, the unloading efficiency can be improved, and there is no need for the lifting members 30 to have a higher lifting force.

After the step of controlling the tilting frame 20 to reach a second tilted position at a second angle relative to the vertical plane, and maintaining for a fifth preset duration, the method further includes:
after maintaining the tilting frame 20 for the fifth preset duration, controlling the tilting frame 20 to move to a third tilted position at a third angle relative to the second tilted position, and maintaining for a sixth preset duration.

By means of the described step, unloading can be further performed, that is, after the container 1 is maintained at the first tilted position for the fourth preset duration, is maintained at the second tilted position for the fifth preset duration, and is maintained at the third tilted position for a sixth preset duration, all of the goods can be completely unloaded. Moreover, by means of the described arrangement, the container 1 can be tilted more easily. That is, when the container 1 is tilted at the first angle, the container 1 is full of goods, that is, the weight of the container 1 is large. Therefore, when the container 1 moves from the vertical state to the first tilted position, the movement of the container 1 is easier. After being maintained for the first preset duration, a significant amount of goods flows out from the container 1, thereby making it easier to further tilt the container 1 to the second angle. After being maintained for the second preset duration, most of the goods flow out. Then, tilting to the third angle and maintaining it for the third preset duration allows all the goods inside the container 1 to flow out completely, thereby achieving full unloading of the goods.

The third angle is greater than the second angle, and the third preset duration is greater than the second preset duration. The described arrangement allows the goods to be unloaded more completely. Specifically, the third angle is greater than the second angle, and the second angle is greater than the first angle. That is, the container undergoes three movements, with each angle increasing progressively, thereby making each movement of the container 1 easier.

The described description is only the preferred embodiments of the present invention, and is not intended to limit the present invention. For those skilled in the art, the present invention may have various modifications and variations. Any modifications, equivalent replacements, improvements and the like made within the spirit and principle of the present invention shall fall within the protection scope of the present invention.

## Claims

1. An unloading platform, comprising:
a platform portion (10);
a tilting frame (20), used for carrying a container (1), the tilting frame (20) having a first working state, wherein when the tilting frame (20) is in the first working state, a first side of the tilting frame (20) is hingedly connected to the platform portion (10), and a second side of the tilting frame (20) has a first initial position in which it is in contact with the platform portion (10) and a first tilted position in which it is raised relative to the platform portion (10);
a lifting member (30), provided between the platform portion (10) and the tilting frame (20), wherein the lifting member (30) drives the tilting frame (20) to switch between the first initial position and the first tilted position; and
a first limiting frame (40), provided on a first side portion of the platform portion (10), wherein when the tilting frame (20) is in the first tilted position, the tilting frame (20) or the container (1) is in limiting engagement with the first limiting frame (40).

2. The unloading platform according to claim 1, wherein a stop slope (41) is provided on a side of the first limiting frame (40) facing the tilting frame (20); and in a direction from top to bottom, a horizontal distance between the stop slope (41) and the platform portion (10) gradually decreases.

3. The unloading platform according to claim 1, wherein the unloading platform further comprises a second limiting frame (50), the second limiting frame (50) is provided on a second side portion of the platform portion (10), and the tilting frame (20) has a second working state; when the tilting frame (20) is in the second working state, the second side of the tilting frame (20) is hingedly connected to the platform portion (10), and the first side of the tilting frame (20) has a second initial position in which it is in contact with the platform portion (10) and a second tilted position in which it is raised relative to the platform portion (10); and the lifting members (30) drive the tilting frame (20) to switch between the second initial position and the second tilted position.

4. The unloading platform according to claim 1, wherein the unloading platform further comprises a locking structure (60), the locking structure (60) is provided between the platform portion (10) and the second side of the tilting frame (20), and the locking structure (60) has a locking state and an unlocking state; and when the locking structure (60) is in the unlocking state, the lifting members (30) can drive the tilting frame (20) to move from the first initial position to the first tilted position.

5. The unloading platform according to claim 1, wherein the tilting frame (20) comprises an outer frame (21) as well as a first main beam (22) and a second main beam (23) connected within the outer frame (21); the outer frame (21) comprises a first end beam (211), a first side beam (212), a second end beam (213) and a second side beam (214) which are arranged sequentially; cross-sectional areas of the first end beam (211), the second end beam (213), the first side beam (212) and the second side beam (214) are all equal; and the first main beam (22) and the second main beam (23) are both arranged along a length direction of the outer frame (21) and are spaced apart, cross-sectional areas of the first main beam (22) and the second main beam (23) are equal, and cross-sectional area of the first main beam (22) is smaller than cross-sectional area of the first end beam (211).

6. The unloading platform according to claim 1, wherein the platform portion (10) comprises a platform body (11) and a mounting frame (12) provided on the platform body (11), and the tilting frame (20) is hingedly connected to the mounting frame (12).

7. The unloading platform according to claim 6, wherein the platform body (11) comprises a third end beam (111) and a fourth end beam (112) which are spaced apart as well as a third side beam (113) and a fourth side beam (114) which are provided between the third end beam (111) and the fourth end beam (112); the third side beam (113) and the fourth side beam (114) have a same shape, a height of a first end of the third side beam (113) is greater than a height of a second end of the third side beam (113), and two ends of the third end beam (111) extend beyond the third side beam (113) and the fourth side beam (114); and the platform body (11) further comprises a plurality of support beams (115), the plurality of support beams (115) are arranged at intervals, and two ends of each of the plurality of support beams (115) respectively extend beyond the third side beam (113) and the fourth side beam (114).

8. The unloading platform according to claim 7, wherein the platform body (11) further comprises a plurality of reinforcing beams (116), and the plurality of reinforcing beams (116) are provided at intervals between the third side beam (113) and the fourth side beam (114); and/or, the platform body (11) further comprises a plurality of connecting rods (117), and at least one connecting rod (117) is provided between the third end beam (111) and the third side beam (113), between the third end beam (111) and the fourth side beam (114), between the fourth end beam (112) and the third side beam (113), between the fourth end beam (112) and the fourth side beam (114), between the first end of each of the plurality of support beams (115) and the third side beam (113), and between the second end of each of the plurality of support beams (115) and the fourth side beam (114).

9. The unloading platform according to claim 6, wherein the platform portion (10) further comprises a traveling mechanism (13), and the traveling mechanism (13) is provided below the platform body (11).

10. An unloading method implemented by an unloading platform, wherein the unloading method comprises:
maintaining a tilting frame (20) at an initial position for a first preset duration; and
after the first preset duration has elapsed, moving the tilting frame (20) from the first initial position to a first tilted position,
wherein the unloading platform is the unloading platform according to any one of claims 1 to 9.

11. The unloading method according to claim 10, wherein a step of moving the tilting frame (20) from the first initial position to a first tilted position comprises:
controlling the first preset duration according to a pressure signal detected by a pressure sensor;
gradually tilting the tilting frame (20) within a second preset duration to reach the first tilted position; and
after the container (1) reaches the first tilted position, moving the tilting frame (20) from the first tilted position to the first initial position within a third preset duration.

12. The unloading method according to claim 10, wherein a step of moving the tilting frame (20) from the first initial position to a first tilted position comprises:
controlling the tilting frame (20) to reach a first tilted position at a first angle relative to a vertical plane, and maintaining for a fourth preset duration; and
after the tilting frame (20) has been maintained for the fourth preset duration, controlling the tilting frame (20) to reach a second tilted position at a second angle relative to the vertical plane, and maintaining for a fifth preset duration, wherein the second angle is greater than the first angle.
